# DEMANDE DE BREVET EUROPEEN

(11) **EP 1 464 577 A1**
(43) Date de publication de la demande: **06.10.2004**
(21) Numéro de dépôt: 03075992.2
(22) Date de dépôt: 03.04.2003
(51) Int. Cl.: B64F 1/22

(54) **Dispositif de contrôle de couple du système de préhension d'un tracteur d'avion**

(71) Demandeur: TLD Europe SA, 79420 Refannes (FR)
(72) Inventeur: Decoux, Laurent, 37000 Tours (FR)
(74) Mandataire: Lepeudry-Gautherat, Thérèse

(57) **Abrégé**

Deux lames (12,13) sont disposées du côté opposé aux portillons articulés (9,10) situés en bout des deux bras longitudinaux (4,5) prévus sur le chassis du tracteur. Ces lames qui sont destinées à se plaquer sur une des deux roues du train avant (11) de l'avion, sont montées chacune à l'extrémité d'un fléau (16) pivotant sur un étrier support (18) solidaire du chassis. Une jauge de contrainte (19) relie une extrémité du fléau à l'extrémité voisine de l'étrier.

Application aux tracteurs de remorquage d'avions.

## Description

L'invention se rapporte aux dispositifs de préhension des tracteurs utilisés dans les aéroports pour remorquer les avions, et elle concerne plus précisément un dispositif permettant de contrôler le couple résistant exercé sur le tracteur par le train avant de l'avion notamment lors d'un virage.

On utilise maintenant des tracteurs qui sont équipés d'un dispositif de préhension permettant de soulever le train avant de l'avion, afin de le remorquer, le train étant comme on sait, constitué d'une paire de roues fixées à l'extrémité d'une jambe pointant vers le bas à partir du nez de l'appareil.

Un dispositif de préhension connu pour tracteur comporte deux bras longitudinaux qui s'étendent à gauche et à droite de l'engin, et qui sont destinés à se placer de part et d'autre du train avant de l'avion. Chaque bras se termine par un portillon articulé, les portillons se refermant alors sur les roues pour enserrer le train avant. A l'avant du tracteur, et donc du côté opposé aux portillons, une plaque plane ou de préférence une lame en forme de pelle, susceptible de pivoter sous l'action d'un vérin, est fixée transversalement au tracteur légèrement au dessus du sol. La lame permet donc de soulever les roues avant de l'avion, immobilisées contre les portillons.

On sait que la jambe portant le train avant de certains avions n'est pas strictement verticale, mais inclinée vers l'avant, aussi, à chaque fois que le tracteur prend un virage, le train avant pivote autour de l'axe longitudinal du tracteur subissant un mouvement de roulis. C'est pour cela que les portillons sont équipés notamment de jauges de contrainte servant à s'assurer que le couple appliqué à la jambe dans les virages ne dépasse jamais une certaine valeur de sécurité structurelle au delà de laquelle la jambe ou son articulation pourraient être endommagées. Mais la mesure effectuée par ces jauges peut être faussée en cas de perte de contact ou de glissement entre le train avant et le dispositif de préhension, et le conducteur du tracteur risque en conséquence de dépasser la valeur limite, malgré sa vigilance.

L'invention vise à éviter ces inconvénients en proposant un dispositif basé sur la mesure par une jauge d'une différence de pression exercée par l'une ou l'autre des deux roues avant le l'avion, enserrées dans le système de préhension.

L'invention a donc pour objet principal un dispositif de contrôle de couple du système de préhension d'un tracteur d'avion comprenant deux bras longitudinaux s'étendant l'un sur la droite et l'autre sur la gauche dudit tracteur, chaque bras portant un portillon articulé à son extrémité, dispositif selon lequel deux lames disposées du côté opposé aux portillons et destinées à se plaquer chacune sur une des deux roues du train avant, sont montées chacune à l'extrémité d'un fléau pivotant sur un étrier support solidaire du chassis du tracteur. Une jauge de contrainte relie une extrémité du fléau à l'extrémité voisine de l'étrier.

D'autres caractéristiques et avantages de l'invention ressortiront de la description qui va suivre d'un exemple de réalisation, dans laquelle il est fait référence aux dessins annexés qui représentent :

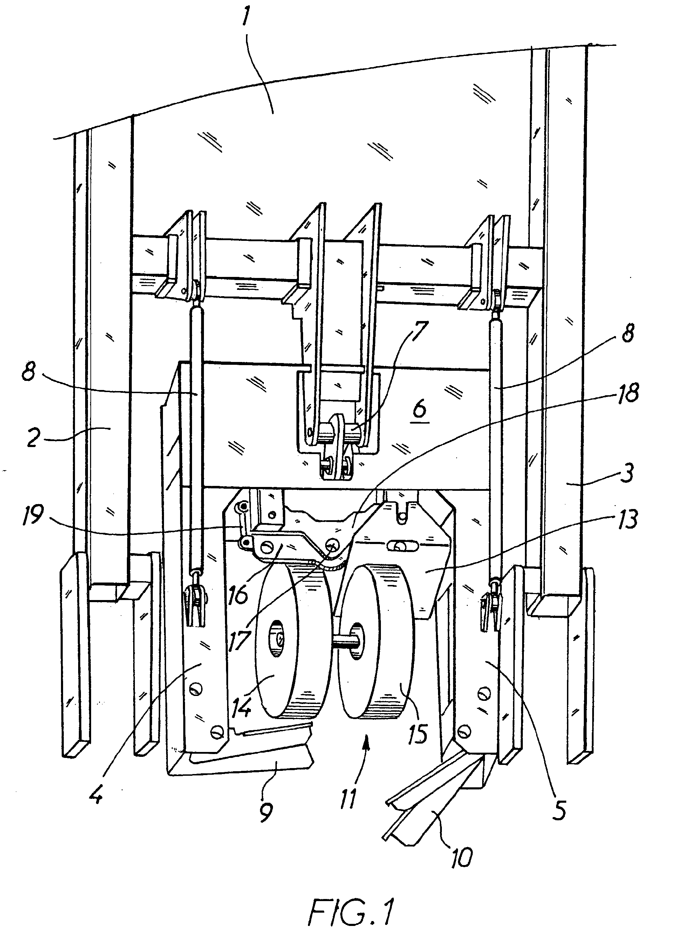

Figure 1 une vue de dessus en perspective du chassis d'un tracteur d'avion.
Figure 2 une vue schématique du dispositif de contrôle de couple.

On voit sur les figures le chassis 1 d'un tracteur d'avion comportant de façon connue, sur sa gauche et sur sa droite des longerons 2 et 3 portant à leurs extrémités les roues antérieures, non représentées, du tracteur. Entre ces longerons 2 et 3 s'étendent des bras longitudinaux 4, 5 montés sur un plateau 6 apte à pivoter par rapport au chassis grâce à une articulation 7, sous l'action de vérins hydrauliques 8.

Les bras longitudinaux 4, 5 se terminent chacun par un portillon articulé 9, 10 susceptible de se refermer vers l'intérieur en direction du train avant 11 de l'avion disposé entre les bras longitudinaux quand le tracteur est en position de préhension.

Du côté opposé aux portillons, le plateau 6 est équipé de deux lames 12, 13 destinées à se plaquer chacune sur une des deux roues 14, 15 du train avant 11. Chaque lame est montée à l'extrémité d'un fléau 16 lui-même monté pivotant autour d'un axe 17 sur un étrier support 18 solidaire du plateau 6. Un moyen de mesure d'effort qui dans l'exemple représenté est une jauge de contrainte 19 relie une extrémité du fléau 16 à l'extrémité voisine de l'étrier 18. En variante de réalisation, la jauge de contrainte pourrait être un vérin hydraulique ou autre système à fusible avec un indexage.

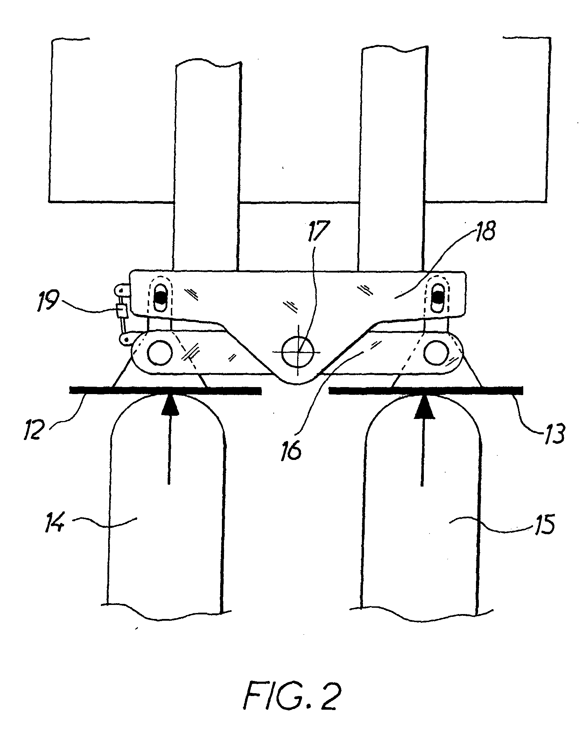

Quand les deux roues 14, 15 du train avant 11 sont appliquées contre les lames 12, 13 comme on le voit plus précisément à la figure 2, et quand elles sont ainsi enserrées entre lesdites lames et les portillons 9, 10, elles exercent sur les lames une pression matérialisée par les flèches.

Dès qu'une différence de pression s'établit entre les deux roues, elle provoque le basculement du fléau 16 autour de son axe 17, à la manière du fléau d'une balance de Robertval. La jauge de contrainte 19 permet de déceler immédiatement et de mesurer le sens du déplacement et la différence du couple appliquée sur les roues.

L'invention décrite précédemment apporte une précision supplémentaire aux mesures effectuées, en utilisant des moyens de mise en oeuvre plus simples et plus précis.

## Revendications

1. Dispositif de contrôle de couple du système de préhension d'un tracteur d'avion comprenant deux bras longitudinaux s'étendant l'un sur la droite et l'autre sur la gauche dudit tracteur, chaque bras portant un portillon articulé à son extrémité, **caractérisé en ce que** deux lames (12,13) disposées du côté opposé aux portillons (9,10) et destinées à se plaquer chacune sur une des deux roues (14,15) du train avant (11), sont montées chacune à l'extrémité d'un fléau (16) pivotant sur un étrier support (18) solidaire du chassis (1,6) du tracteur, et **en ce que** au moins un moyen de mesure d'effort (19) relie une extrémité du fléau à l'extrémité voisine de l'étrier.

2. Dispositif de contrôle selon la revendication 1, **caractérisé en ce que** le moyen de mesure d'effort est une jauge de contrainte (19).

3. Dispositif de contrôle selon la revendication 1 **caractérisé en ce que** l'étrier support (18) est solidaire d'un plateau (6) sur lequel sont également montés les bras longitudinaux (4,5), le plateau pouvant pivoter par rapport au chassis (1) du tracteur.
